# EUROPEAN PATENT APPLICATION

(11) **EP 3 521 974 A1**
(43) Date of publication of application: **07.08.2019**
(21) Application number: 16917215.2
(22) Date of filing: 29.09.2016
(51) Int. Cl.: G06F 3/01

(54) **ELECTRONIC DEVICE**

(71) Applicant: Shenzhen Royole Technologies Co., Ltd., Shenzhen, Guangdong 518052 (CN)
(72) Inventor: WU, Weifeng, Shenzhen Guangdong 518052 (CN); XIA, Xinyuan, Shenzhen Guangdong 518052 (CN)
(74) Representative: Zimmermann, Tankred Klaus
(86) International application number: PCT/CN2016/100891
(87) International publication number: WO 2018/058461

(57) **Abstract**

The present disclosure discloses an electronic device. The electronic device includes a bracket, a flexible display screen and a cover member. The bracket includes a curved surface and a first guide rail. The flexible display screen is disposed on the curved surface. The cover member is slidably disposed on the first guide rail and slidable between the first position and the second position. The flexible display screen is in an open state when the cover member is in the first position or in a closed state when the cover member is in the second position. With the electronic device according to embodiments of the present disclosure, it is possible to change the display state of the flexible display screen by sliding the cover member. When the user does not need to use the electronic device, the flexible display screen is hidden under the cover member to be protected.

## Description

### FIELD

The present disclosure relates to the field of wearable smart devices, and in particular to an electronic device.

### BACKGROUND

In recent years, as the product intelligence trend is intensifying, smart wearable devices such as smart watches and smart bands have gradually become popular with consumers. The smart wearable devices with display screens can realize visual operation, clearly display related information, and greatly facilitate people's life.

However, in the related art, the display screen of the smart wearable device is generally exposed outside and easily damaged, and the display screen is liable to accumulate dust or water stains after a long time, which affects the service life of the smart wearable device.

### SUMMARY

The present disclosure aims to solve at least one of the technical problems existing in the related art. Therefore, the present disclosure provides an electronic device.

The electronic device according to embodiments of the present disclosure includes a bracket, a flexible display screen, and a cover member. The bracket includes a curved surface and a first guide rail. The flexible display screen is disposed on the curved surface. The cover member is slidably disposed on the first guide rail and slidable between a first position and a second position. The flexible display screen is in an open state when the cover member is in the first position, or in a closed state when the cover member is in the second position.

With the electronic device according to embodiments of the present disclosure, it is possible to change the display state of the flexible display screen by sliding the cover member. When the user does not need to use the electronic device, the flexible display screen is hidden under the cover member to be protected.

In some embodiments, the bracket includes an elastic plate, and the curved surface includes an upper surface of the elastic plate, and the flexible display screen is disposed on the upper surface.

In some embodiments, the bracket includes a flexible ring, and the elastic plate is disposed on the flexible ring.

In some embodiments, the flexible ring includes a strip portion; the elastic plate is disposed on the strip portion, and the first guide rails are disposed on both sides of the strip portion.

In some embodiments, the cover member includes a first cover and a second cover slidable relative to each other. In the first position, the first cover and the second cover are separated to expose the flexible display screen from between the first cover and the second cover. In the second position, the first cover and the second cover are connected to cover the flexible display screen.

In some embodiments, the electronic device includes a linkage mechanism connected with the first cover and the second cover, and configured to drive the second cover to slide when the first cover is slid or to drive the first cover to slide when the second cover is slid.

In some embodiments, the bracket is formed with a second guide rail, and the linkage mechanism includes a first rack disposed on the second guide rail and connected with the first cover, a second rack disposed on the second guide rail and connected with the second cover, and a gear rotationally disposed on the bracket and engaged with the first rack and the second rack.

In some embodiments, a guide direction of the first guide rail is the same as that of the second guide rail.

In some embodiments, the cover member is formed with a transparent region, and the electronic device includes a sensor configured to detect whether the cover member is in the second position, and a control unit configured to control the flexible display screen to perform a partial display corresponding to the transparent region when the cover member is in the second position.

In some embodiments, the sensor includes a microswitch.

In some embodiments, the control unit is configured to control the flexible display screen to perform a full screen display when the cover member is away from the second position.

In some embodiments, the electronic device includes a battery disposed on the bracket and electrically connected to the flexible display screen.

In some embodiments, the electronic device includes a printed circuit board disposed on the bracket, and the flexible display screen is electrically connected to the printed circuit board.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is schematic views showing a process of switching display states of an electronic device according to an embodiment of the present disclosure.
Fig. 2 is a schematic view of an electronic device according to an embodiment of the present disclosure, in which a flexible display screen is in an open state.
Fig. 3 is a schematic view of an electronic device according to an embodiment of the present disclosure, in which a flexible display screen is in a closed state.
Fig. 4 is an exploded view of an electronic device according to an embodiment of the present disclosure.
Fig. 5 is a partially exploded view of an electronic device according to an embodiment of the present disclosure.
Fig. 6 is a block diagram of an electronic device according to an embodiment of the present disclosure.

Major components and reference numerals:
Electronic device 10, bracket 11, curved surface 112, elastic plate 114, flexible ring 116, strip portion 1162, first guide rail 118, flexible display screen 12, cover member 13, first cover 132, second cover 134, transparent region 136, linkage mechanism 14, first rack 142, second rack 144, gear 146, second guide rail 15, sensor 16, control unit 17, battery 18, and printed circuit board 19.

### DETAILED DESCRIPTION

Reference will be made in detail below to embodiments of the present disclosure. Examples of the embodiments are illustrated in the drawings. The same or similar elements and the elements having same or similar functions are denoted by same or similar reference numerals throughout the descriptions.

The embodiments described below with reference to drawings are explanatory, and only used to generally understand the present disclosure. The embodiments shall not be construed to limit the present disclosure.

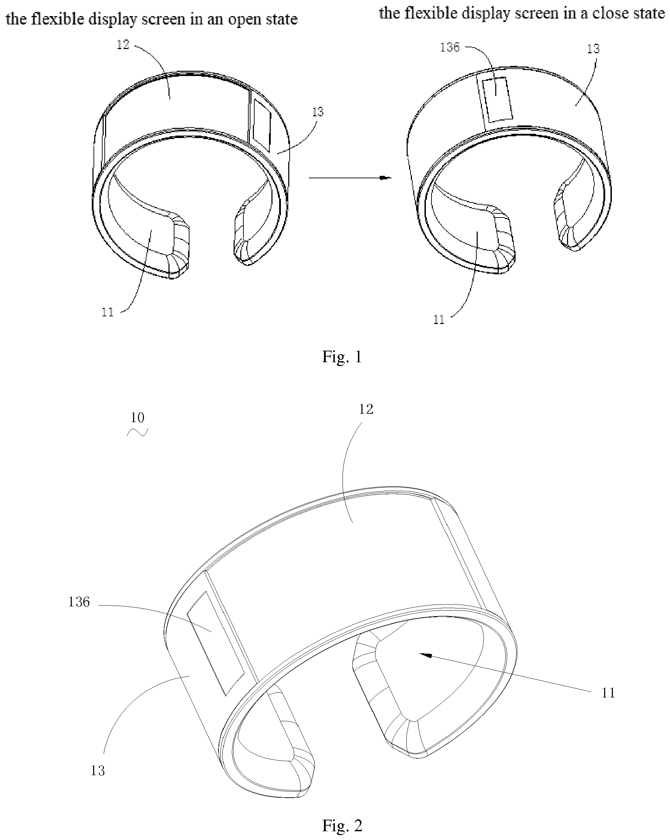

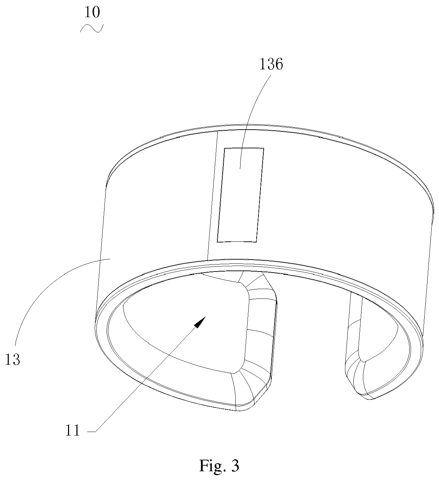

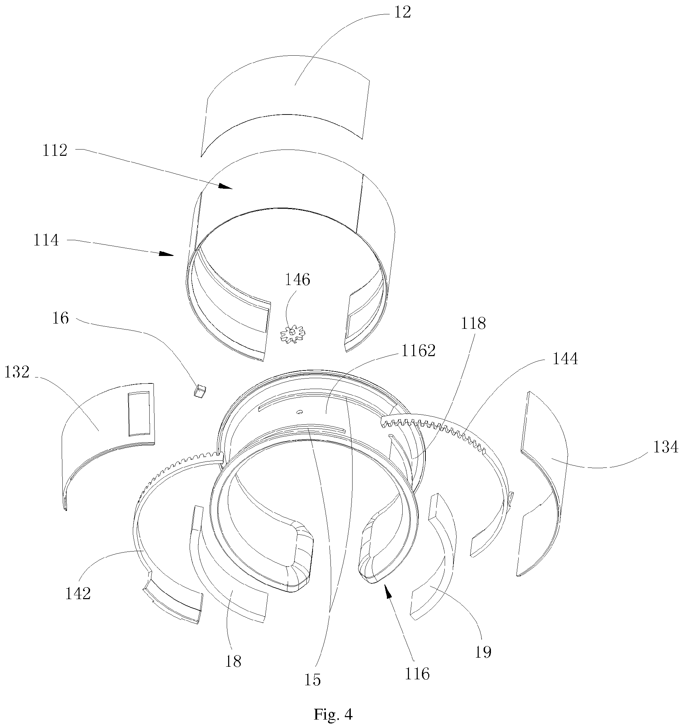

Referring to Figs. 1 to 4, an electronic device 10 according to an embodiment of the present disclosure includes a bracket 11, a flexible display screen 12, and a cover member 13. The bracket 11 includes a curved surface 112 and a first guide rail 118. The flexible display screen 12 is disposed on the curved surface 112. The cover member 13 is slidably disposed on the first guide rail 118 and slidable between a first position and a second position. The flexible display screen 12 is in an open state when the cover member 13 is in the first position, or in a closed state when the cover member 13 is in the second position.

With the electronic device 10 according to embodiments of the present disclosure, it is possible to change the display state of the flexible display screen 12 by sliding the cover member 13. When the user does not need to use the electronic device 10, the flexible display screen 12 is hidden under the cover member 13 to be protected.

In some embodiments, the electronic device 10 may be designed into the form of a band convenient for people to wear, and has advantages of being portable, beautiful, not easily lost, and convenient to use.

Of course, the form of the electronic device 10 is not limited to the above embodiments. In other embodiments, the electronic device 10 may be designed into other forms as required.

In some embodiments, the bracket 11 includes an elastic plate 114, and the curved surface 112 includes an upper surface of the elastic plate 114, and the flexible display screen 12 is disposed on the upper surface.

In this way, the flexible display screen 12 is disposed on the upper surface of the elastic plate 114, and the elastic plate 114 can better support the flexible display screen 12.

In some embodiments, the bracket 11 includes a flexible ring 116, and the elastic plate 114 is disposed on the flexible ring 116.

In this way, the electronic device 10 may be worn as a band, and the flexible ring 116 makes it more comfortable for a user to wear the electronic device 10.

In some embodiments, the flexible ring 116 can be made of a soft silicone material.

In this way, it is possible to protect skin of users from abrasion caused by the bracket 11 during the process of wearing the electronic device 10, and the soft silicone material is less likely to cause allergies.

In some embodiments, the flexible ring 116 includes a strip portion 1162. The elastic plate 114 is disposed on the strip portion 1162. The first guide rails 118 are disposed on both sides of the strip portion 1162.

In this way, the first guide rail 118 slides above the elastic plate 114 and has good stability.

In some embodiments, the cover member 13 includes a first cover 132 and a second cover 134 slidable relative to each other. In the first position, the first cover 132 and the second cover 134 are separated to expose the flexible display screen 12 from between the first cover 132 and the second cover 134. In the second position, the first cover 132 and the second cover 134 are connected to cover the flexible display screen 12.

When the user needs to switch the display state, since the cover member 13 includes the first cover 132 and the second cover 134 slidable relative to each other, the stroke of each cover can be reduced, and the operation is very simple. In the first position, the first cover 132 and the second cover 134 are located on two sides of the bracket 11 to expose the flexible display screen 12 from between the first cover 132 and the second cover 134. In the second position, the first cover 132, the second cover 134 and the bracket 11 form a closed accommodation space, and the flexible display screen 12 is accommodated in the accommodation space.

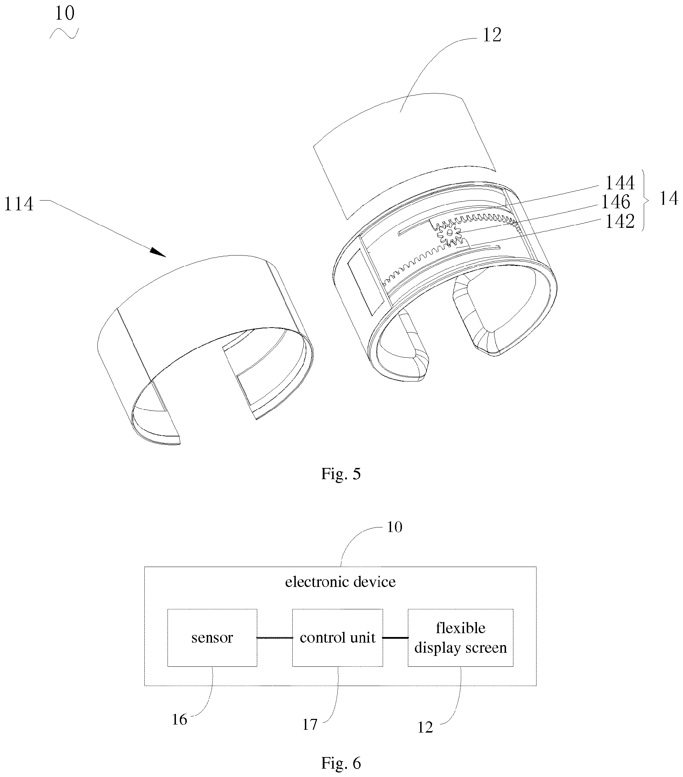

Referring to Fig. 5, in some embodiments, the electronic device 10 includes a linkage mechanism 14 connected with the first cover 132 and the second cover 134, and configured to drive the second cover 134 to slide when the first cover 132 is slid or to drive the first cover 132 to slide when the second cover 134 is slid.

In this way, when switching the display state, the user only needs to slide one cover of the first cover 132 or the second cover 134 to drive the other cover to slide, which makes the operation more convenient and improves the user's experience.

In some embodiments, the bracket 11 is formed with a second guide rail 15. The linkage mechanism 14 includes a first rack 142 disposed on the second guide rail 15 and connected with the first cover 132, a second rack 144 disposed on the second guide rail 15 and connected with the second cover 134, and a gear 146 rotationally disposed on the bracket 11 and engaged with the first rack 142 and the second rack 144.

In this way, by engaging the first rack 142 and the second rack 144 with the gear 146, the first cover 132 and the second cover 134 are linked, and one cover of the first cover 132 or the second cover 134 only needs to be slid to drive the other cover to slide.

In some embodiments, a guide direction of the first guide rail 118 is the same as that of the second guide rail 15.

In this way, the sliding direction of the cover member 13 coincides with the movement direction of the first rack 142 and the second rack 144, so that the processes of closing and opening the cover member 13 along the first guide rail 118 become smoother, and thus improve the user's experience.

When the cover member 13 covers the flexible display screen 12, a small window may be used to display related information. Referring to Fig. 6, in some embodiments, the cover member 13 is formed with a transparent region 136. The electronic device 10 includes a sensor 16 configured to detect whether the cover member 13 is in the second position, and a control unit 17 configured to control the flexible display screen 12 to perform a partial display corresponding to the transparent region 136 when the cover member 13 is in the second position. In other words, when the cover member 13 is in the second position, information is displayed on a part of the flexible display screen 12 corresponding to the transparent region 136, and can be observed through the transparent region 136.

In this way, when the cover member 13 is in the second position, the electronic device 10 displays information through the transparent region 136. On the one hand, the cover member 13 can be closed when the user does not need a full screen display, and thus the flexible display screen 12 is protected. On the other hand, the loss of energy can be reduced by displaying information through the transparent region 136, i.e. a small window.

In some embodiments, the information displayed through the transparent region 136 includes important information such as time, notifications, and weather. In other embodiments, some information that the user pays attention to may also be set to display in the transparent region 136 depending on the user's needs.

In some embodiments, the sensor 16 includes a microswitch.

Specifically, the microswitch is disposed in a predetermined position on the bracket 11, and when the cover member 13 is in the second position, the microswitch is triggered, so that the control unit 17 controls the flexible display screen 12 to perform the partial display corresponding to the transparent region 136.

For example, in examples of the present disclosure, the sensor 16 is disposed in the slide stroke of the first rack 142. When the first cover 132 and the second cover 134 move from the separated position to the connected position, for example, when the first cover 132 is slid, the first cover 132 drives the first rack 142 to move, and the first rack 142 drives the second cover 134 to move toward the first cover 132 by the gear 146 together with the second rack 144. When the first cover 132 and the second cover 134 are connected to cover the flexible display screen 12, the sensor 16 is triggered by the first rack 142. The control unit 17 controls the flexible display screen 12 to perform the partial display corresponding to the transparent region 136 depending on the trigger signal sent by the sensor 16.

Of course, the type of the sensor 16 is not limited to the above-described embodiments. In other embodiments, other types of the sensor 16 may be used as required. For example, the sensor 16 may also be a photoelectric switch.

In some embodiments, the control unit 17 is configured to control the flexible display screen 12 to perform a full screen display when the cover member 13 is away from the second position.

In this way, when the cover member 13 is away from the second position, that is, after the cover member 13 is opened, the user does not need to click a button or a screen, the control unit 17 controls the screen to be lighted, and the operation becomes more convenient.

In some embodiments, the electronic device 10 includes a battery 18 disposed on the bracket 11 and electrically connected to the flexible display screen 12.

In this way, individual electronic components including the flexible display screen 12 can be powered by the battery 18 to ensure the normal operation of the electronic device 10.

Specifically, the battery 18 may be a rechargeable battery, such as a rechargeable lithium battery.

In some embodiments, the bracket 11 is disposed with a USB interface. The USB interface is electrically connected with the battery 18 and can be connected with an external power supply to charge the battery 18 or configured to obtain data of the electronic device 10.

In some embodiments, the electronic device 10 includes a printed circuit board 19 disposed on the bracket 11, and the flexible display screen 12 is electrically connected to the printed circuit board 19.

In this way, individual electronic components including the flexible display screen 12 may be provided with support and line connections through the printed circuit board 19 (PCBA, Printed Circuit Board + Assembly).

In the description of the embodiments of the present disclosure, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," and "counterclockwise" should be construed to refer to the orientation or positional relation as then described or as shown in the drawings under discussion. These relative terms are for convenience of description of embodiments of the present disclosure and simplified description, and are not intended to indicate or imply that the device or component have a particular orientation, or be constructed or operated in a particular orientation. It is not understood to be a restriction on the way in which the invention is implemented. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of' means two or more than two, unless specified otherwise.

In the description of the embodiments of the present disclosure, unless specified or limited otherwise, it is noted that the terms "mounted," "connected," "coupled," are understood broadly, and may be, for example, fixed connections, detachable connections, or integral connections; may be mechanical connections, may also be electrical connections or may communicate with each other; may also be direct connections or indirect connections via intervening structures; may also be inner communications of two elements or interaction relationship of two elements, which can be understood by those skilled in the art according to specific situations.

In the embodiments of the present disclosure, unless specified or limited otherwise, a structure in which a first feature is "on" or "below" a second feature may comprise an embodiment in which the first feature is in direct contact with the second feature, and may also comprise an embodiment in which the first feature and the second feature are not in direct contact with each other, but are contacted via an additional feature formed therebetween. Furthermore, a first feature "on," "above," or "on top of' a second feature may comprise an embodiment in which the first feature is right or obliquely "on," "above," or "on top of' the second feature, or just means that the first feature is at a height higher than that of the second feature; while a first feature "below," "under," or "on bottom of' a second feature may comprise an embodiment in which the first feature is right or obliquely "below," "under," or "on bottom of' the second feature, or just means that the first feature is at a height lower than that of the second feature.

Various embodiments and examples are provided in the following description to implement different structures of the present disclosure. In order to simplify the disclosure of the embodiments of the present disclosure, certain elements and settings will be described below. Certainly, these elements and settings are only by way of example and are not intended to limit the present disclosure. In addition, reference numerals and / or reference letters may be repeated in different examples in the embodiments of the present disclosure. This repeating is for the purpose of simplification and clarity and does not refer to relations between different embodiments and/or settings. Furthermore, examples of different processes and materials are provided in the embodiments of the present disclosure. However, it would be appreciated by those skilled in the art that other processes and / or materials may be also applied.

In the description of this specification, reference terms "an embodiment," "some embodiments," "explanatory embodiment," "an example," "a specific example," or "some examples," means that a particular feature, structure, material, or characteristic described in connection with the embodiment or example is comprised in at least one embodiment or example of the present disclosure. Thus, the explanatory expression of above mentioned terms throughout this specification are not necessarily referring to the same embodiment or example. Furthermore, the particular features, structures, materials, or characteristics may be combined in any suitable manner in one or more embodiments or examples.

Any process or method described in a flow chart or described herein in other ways may be understood to comprise one or more modules, segments or portions of codes of executable instructions for achieving specific logical functions or steps in the process, and the scope of a preferred embodiment of the present disclosure comprises other implementations in which functions may be performed in an order that is not shown or discussed, including in a substantially simultaneous manner or in reverse order according to the functions involved, which should be understood by those skilled in the art.

The logic and/or step shown in the flow chart or described in other manners herein, for example, a particular sequence table of executable instructions for realizing the logical function, may be specifically achieved in any computer readable medium to be used by the instruction execution system, device or equipment (such as the system based on computers, the system comprising processing module or other systems capable of obtaining the instruction from the instruction execution system, device and equipment and executing the instruction), or to be used in combination with the instruction execution system, device and equipment. As to the specification, "the computer readable medium" may be any device adaptive for comprising, storing, communicating, propagating or transferring programs to be used by or in combination with the instruction execution system, device or equipment. More specific examples of the computer readable medium (a non-exhaustive list) comprise: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The above-mentioned storage medium may be a read-only memory, a magnetic disc, an optical disc, etc.

Although embodiments of the present disclosure have been shown and described above, it would be appreciated that the above embodiments are explanatory and cannot be construed to limit the present disclosure, and changes, modifications, alternatives, and variants can be made by those skilled in the art in the embodiments without departing from spirit, principles and scope of the present disclosure.

## Claims

1. An electronic device, comprising:
a bracket comprising a curved surface and a first guide rail;
a flexible display screen disposed on the curved surface; and
a cover member slidably disposed on the first guide rail and slidable between a first position and a second position, wherein the flexible display screen is in an open state when the cover member is in the first position, or in a closed state when the cover member is in the second position.

2. The electronic device according to claim 1, wherein the bracket comprises an elastic plate, and the curved surface comprises an upper surface of the elastic plate, and the flexible display screen is disposed on the upper surface.

3. The electronic device according to claim 2, wherein the bracket comprises a flexible ring and the elastic plate is disposed on the flexible ring.

4. The electronic device according to claim 3, wherein the flexible ring comprises a strip portion, the elastic plate is disposed on the strip portion, and the first guide rails are disposed on both sides of the strip portion.

5. The electronic device according to claim 1, wherein the cover member comprises a first cover and a second cover slidable relative to each other;
in the first position, the first cover and the second cover are separated to expose the flexible display screen from between the first cover and the second cover;
in the second position, the first cover and the second cover are connected to cover the flexible display screen.

6. The electronic device according to claim 5, wherein the electronic device comprises a linkage mechanism connected with the first cover and the second cover, and configured to drive the second cover to slide when the first cover is slid or to drive the first cover to slide when the second cover is slid.

7. The electronic device according to claim 6, wherein the bracket is formed with a second guide rail, and the linkage mechanism comprises a first rack disposed on the second guide rail and connected with the first cover, a second rack disposed on the second guide rail and connected with the second cover, and a gear rotationally disposed on the bracket and engaged with the first rack and the second rack.

8. The electronic device according to claim 7, wherein a guide direction of the first guide rail is the same as that of the second guide rail.

9. The electronic device according to claim 1, wherein the cover member is formed with a transparent region, and the electronic device comprises a sensor configured to detect whether the cover member is in the second position, and a control unit configured to control the flexible display screen to perform a partial display corresponding to the transparent region when the cover member is in the second position.

10. The electronic device according to claim 9, wherein the sensor comprises a microswitch.

11. The electronic device according to claim 9, wherein the control unit is configured to control the flexible display screen to perform a full screen display when the cover member is away from the second position.

12. The electronic device according to claim 1, wherein the electronic device comprises a battery disposed on the bracket and electrically connected to the flexible display screen.

13. The electronic device according to claim 1, wherein the electronic device comprises a printed circuit board disposed on the bracket, and the flexible display screen is electrically connected to the printed circuit board.
